# EUROPÄISCHE PATENTSCHRIFT

(11) **EP 1 921 000 B1**
(45) Veröffentlichungstag und Bekanntmachung des Hinweises auf die Patenterteilung: **30.06.2010**
(21) Anmeldenummer: 07021164.4
(22) Anmeldetag: 30.10.2007
(51) Int. Cl.: B62D 25/20

(54) **Boden vorne eines Karosserieunterbaus**
Front floor of a bodywork substructure
Fond avant d'un châssis de carrosserie

(30) Priorität: 10.11.2006 DE 102006052993
(43) Veröffentlichungstag der Anmeldung: 14.05.2008
(73) Patentinhaber: GM Global Technology Operations, Inc., Detroit, MI 48265-3000 (US)
(72) Erfinder: Bufe, Ronny, 65428 Rüsselheim (DE); Gloger, Stefan, Dr., 64367 Mühltal (DE); Hartmann, Jens, 65439 Flörsheim (DE); Köhr, Joachim, 67435 Neustadt (DE); Lang, Heinz-Günter, 55257 Budenheim (DE); Patschicke, Hans-Joachim, 64572 Büttelborn (DE); Schlelein, Matthias, 55294 Bodenheim (DE); Seyfried, Matthias, 55294 Bodenheim (DE); Stenger, Ralph, 63533 Mainhausen (DE); Strehl, Dirk, 64331 Weiterstadt (DE)
(74) Vertreter: Daniel, Ulrich W.P.

(56) Entgegenhaltungen:
- WO-A-2004/035295
- WO-A-2005/082699
- WO-A-2007/075535
- DE-A1- 19 608 127
- JP-A- 2001 010 542
- US-A1- 2004 041 429
- US-B1- 6 854 791
- JAN SCHUT: "Compounding: Why Long Glass Makers Are Compounding In-Line" [Online] 5. April 2002 (2002-04-05), PLASTICS TECHNOLOGY , ONLINE , XP002470001 Gefunden im Internet: URL:http://www.ptonline.com/articles/20020 4fa3.html> [gefunden am 2008-02-21] * das ganze Dokument *
- CHARLES A HARPER: "Handbook of Plastic Processes" [Online] 7. Oktober 2005 (2005-10-07), WILEY INTERSCIENCE , ONLINE , XP002470000 ISBN: 978 0 471 78658 0 Gefunden im Internet: URL:http://dx.doi.org/10.1002/0471786586> [gefunden am 2008-02-21] * Seite 508 - Seite 510 *
- STEPHEN T BOWER: "Direct in-line compounding - the Pushtrusion process" REINFORCED PLASTICS, [Online] Bd. 50, Nr. 1, 25. Januar 2006 (2006-01-25), Seiten 36-39, XP002470066 Gefunden im Internet: URL:http://dx.doi.org/10.1016/S0034-3617(0 6)70871-2> [gefunden am 2008-02-21]
- JENNIFER MARKARIAN: "Long fibre reinforcement drives automotive market forward" PLASTICS ADDITIVES AND COMPOUNDING, [Online] Bd. 7, Nr. 3, 16. Juni 2005 (2005-06-16), Seiten 24-29, XP002470067 Gefunden im Internet: URL:http://dx.doi.org/10.1016/S1464-391X(0 5)70393-7> [gefunden am 2008-02-21]
- "hydraulic press" [Online] 1. Oktober 2007 (2007-10-01), DIEFFENBACHER , ONLINE , XP002470002 Gefunden im Internet: URL:http://www.dieffenbacher.com/pdf/prosp ekte/Kunststoff_Prospekt_102007_GB.pdf> [gefunden am 2008-02-21] * Seite 9 *

## Beschreibung

Die Erfindung betrifft den Boden vorne des Unterbaus einer selbsttragenden Karosserie eines Kraftfahrzeugs, beispielsweise eines Pkw.

Eine selbsttragende Kraftfahrzeugkarosserie besitzt einen die Fahrgastzelle nach unten hin abschließenden Unterboden, der über Hochstreben, meist A-, B- und C-Säule genannt, mit dem Dach verbunden ist. Der Unterboden selbst besteht aus mehreren Modulen, die herkömmlicherweise als Blechteile im Rahmen der Fertigung zusammengeschweißt werden. Hierzu gehören unter anderem die Seitenschweller, Sitzquerträger, Sitzauflagen und der Tunnel. Zwischen diesen sich in Fahrzeuglängsrichtung erstreckenden Modulen befinden sich Bodenplatten, nämlich im vorderen Karosseriebereich, d.h. in etwa unter den Vordersitzen, der Boden vorne auf beiden Seiten des Tunnels, im mittleren Karosseriebereich hinter dem Fersenblech der Boden hinten und im hinteren Karosseriebereich hinter dem Hinterachsquerträger die Verlängerung Boden hinten mit der Reserveradmulde.

Das D-LFT-Verfahren, auch Direkt-LFT-Verfahren genannt, ist ein allgemein bekanntes Verfahren der Kunststoffverarbeitung. LFT steht für langfaserverstärkter Kunststoff. Beim D-LFT Verfahren wird in einem Extruder die Matrix aus einem thermoplastischen Kunststoff plastifiziert und in einem Mischer mit auf Länge gekürzten Endlosfasern vermengt. Das faserhaltige Plastifikat wird dann (direkt) in Form gepresst. Das Ergebnis ist ein Faser-Kunststoff-Verbund mit einer Kunststoffmatrix, in dem die Langfasern eingebettet sind. Bedingt durch den Extrudereinsatz kann die Faserlänge allgemein zwischen 1 mm und 50 mm betragen.

Die JP 2001 010542 A beschreibt einen aus einem glasfaserverstärkten thermoplastischen Kunststoff gefertigten Fahrzeugboden, wobei thermoplastische Granulatpellets eine Faserverstärkung bilden. Bei einem solchen sogenannten G-LFT Verfahren werden lange Fasern in Granulatform aus einem offenen Extruder direkt in eine Pressform gebracht und umgeformt.

Die WO2004 035295 A1 beschreibt einem Fahrzeug unterboden der durch ein Direkt-LFT Verfahren hergestellt wird.

Es ist eine Aufgabe einer Ausführungsform der Erfindung, einen Boden vorne mit geringem Gewicht bei geringerem Herstellungsaufwand bereitzustellen, der zudem kostengünstiger herstellbar ist.

Die Lösung dieser Aufgabe erfolgt mit einem Boden vorne eines Karosserieunterbaus nach Anspruch 1 bzw. einem Verfahren zur Herstellung eines solchen Bodens nach Anspruch 13. Vorteilhafte Weiterbildungen und weitere Ausführungsformen ergeben sich mit den Merkmalen der abhängigen Ansprüche.

Ein erster Aspekt der Erfindung betrifft den Boden vorne eines Karosserieunterbaus eines Kraftfahrzeugs. Dieser besitzt gemäß einer ersten Ausführungsform eine im D-LFT-Verfahren hergestellte Bodenplatte aus Kunststoff.

Ein erster Aspekt der Erfindung betrifft den Boden vorne eines Karosserieunterbaus eines Kraftfahrzeugs. Dieser besitzt gemäß einer ersten Ausführungsform eine im D-LFT-Verfahren hergestellte Bodenplatte aus Kunststoff sowie eine einteilig mit der Bodenplatte ausgebildete und zusammen mit der Bodenplatte in einem Arbeitsgang hergestellte Sitzbefestigung aus Kunststoff, wobei die Sitzbefestigung eine Metallverstärkung besitzt.

Die Bodenplatte hat, bei gleicher Strukturstabilität für den Fall eines Frontal- oder Seitenaufpralls, im Vergleich zu einer herkömmlichen, aus Blech bestehenden Bodenplatte ein geringeres Gewicht. Umgekehrt bietet dieser Boden vorne die Möglichkeit, die zunehmend schärferen Anforderungen an Kfz-Karosserien bzgl. ihrer Strukturstabilität bei Seiten- oder Frontalaufpralltests, z. B. solche nach Euro-NCAP, leichter zu erfüllen. Weiterhin kann eine Unterbodenverkleidung zur Verbesserung des aerodynamischen Verhaltens eingespart werden bzw. ist die Bodenplatte die Unterbodenverkleidung selbst.

Die oben genannte Bodenplatte besteht also aus einem faserverstärkten Kunststoff bzw. hat eine Kunststoffmatrix mit darin eingebetteten Fasern. Eingedenk der verwendbaren Faserlängen zwischen 1 mm und 50 mm kann auch davon gesprochen werden, dass es sich um einen langfaserverstärkten Kunststoff bzw. um eine Kunststoffmatrix mit eingebetteten Langfasern handelt.

Die Bodenplatte ist formschlüssig mit einer Sitzbefestigung aus Kunststoff verbunden. Mit der sich damit ergebenden einteiligen Ausbildung von Bodenplatte und Sitzbefestigung werden Montageschritte eingespart, was die Herstellungskosten mindert und die Herstellungszeit verkürzt. Gleichzeitig haben dadurch die Montagelöcher für die Sitzbefestigung eine wohl definierte Position mit engen Toleranzen, was bei der konventionellen Blechbauweise nicht der Fall ist. Dies bedingt eine vereinfachte Montage der Fahrzeugsitze. Durch die einteilige Ausbildung lässt sich auch weitergehend eine Funktionsintegration vornehmen, und zum Beispiel verschiedene Befestigungselemente wie Sitzauflagen etc. mit in die Bodenplatte integrieren.

Die Sitzbefestigung wird erfindungsgemäß zusammen mit der Bodenplatte im D-LFT-Verfahren hergestellt, womit die Bodenplatte und die Sitzbefestigung einfach und preiswert in einem Arbeitsgang herzustellen sind.

Ausführungsformen des Bodens vorne haben eine Bodenplatte mit Glasfasern, Kohlefasern oder Naturfasern. Auch hochfeste Aramidfasern, wie sie im Sicherheitsbereich Verwendung finden, können für den Boden vorne verwendet werden.

Experimente haben ergeben, dass sich bei Ausführungsformen, bei denen die durchschnittliche Faserlänge zwischen 20 mm und 40 mm betrug, die Bodenplatte zum einen im D-LFT-Verfahren gut herstellen lässt und sich andererseits über die Fasern eine Strukturstabilität erzielen lässt, die genauso gut oder besser als diejenige von Blechausführungen ist. Beste Ergebnisse ergaben sich bei Faserlängen von etwa 1 Zoll (25,4 mm). Bei kleineren Faserlängen, die in den einstelligen Millimeterbereich gehen, nimmt die Strukturverstärkung durch die Fasern zunehmend ab, wohingegen sich längere Fasern im Extruder zunehmend schlechter verarbeiten lassen.

In einer weiteren Ausführungsform wird als Material Polyamid (abgekürzt: PA) oder Polypropylen (abgekürzt: PP) gewählt. Bei Polyamid ist es wegen dessen guter Temperaturstabilität möglich, die Karosserie mit montiertem Boden vorne durch eine Lackierstraße zu führen, ohne dass sie temperaturbedingt Schaden nimmt. Auf diese Weise müssen etablierte Prozessabläufe, die sich bei der Fertigung von Blechkarosserien herausgebildet haben, nicht verändert werden. Dies vermeidet Zusatzkosten, die sonst durch eine Umstellung der Fertigungsabläufe entstünden. Polypropylen ist ein preiswerteres Material als Polyamid und macht es wegen einer geringeren Temperaturstabilität erforderlich, den Boden vorne nach dem Durchlaufen der Lackierstraße einzubauen. Der Einbau erfolgt zum Beispiel durch Verkleben.

Weitere Ausführungsformen des Bodens vorne haben einen Faseranteil zwischen 20 Gew% und 40 Gew%. Gute Ergebnisse wurden insofern mit PA6.6/GF30 bzw. PP/GF30 erzielt. Der genannte Faseranteil ist hierbei ein Kompromiss. Unter 20 Gew% ist die Stabilität der Bodenplatte unbefriedigend. Bei über 40 Gew% wird die Bodenplatte zu schwer, wobei sich gleichzeitig ihre Herstellbarkeit verschlechtert.

Bei einer weiteren Ausführungsform besitzt die Bodenplatte eine an ihrer Oberfläche angeordnete Verstärkung aus Metall oder Gewebe. Die Metallverstärkung kann hierbei in der Bodenplatte integriert sein. Hierdurch kann das Verhalten des Bodens vorne bei einem Unfall, zum Beispiel bei einem Frontal- oder Seitenaufprall, verbessert werden. Größe, Dicke und Ort der Metallschicht hängen vom jeweiligen Fahrzeugtyp und den Strukturanforderungen ab, die diesbezüglich an das Fahrzeug gestellt werden.

Erfindungsgemäß besitzt die Sitzbefestigung eine Verstärkung aus Metall. Diese Metallverstärkung kann in der Sitzbefestigung integriert sein. Diese Metallverstärkung, ggf. in Kombination mit der im letzten Absatz genannten Metallverstärkung der Bodenplatte, verbessert das Verhalten bei einem Frontal- oder Seitenaufprall. Die Längsträger der Sitzbefestigung stabilisieren den Boden vorne in Fahrzeuglängsrichtung und verhindern ein Wegkippen des Fahrzeugsitzes bei einem Aufprall von vorne oder hinten. Der die Längsträger verbindende Sitzquerträger stabilisiert den Boden vorne zusätzlich senkrecht zur Fahrzeuglängsrichtung.

Der Boden vorne wird bei gleicher Strukturstabilität noch leichter, wenn die Sitzbefestigung eine Wabenstruktur besitzt. Umgekehrt wird bei gleichem Materialeinsatz die Bodenplatte noch stabiler.

Weiterhin sehen Ausführungsformen des Bodens vorne vor, dass die Bodenplatte an ihrer Oberfläche Versteifungsrippen besitzt, womit seine Torsions- und Biegesteifigkeit gesteigert werden kann.

Weitere Aspekte der Erfindung betreffen den Karosserieunterbau einer Kraftfahrzeugkarosserie, eine Kraftfahrzeugkarosserie und ein Kraftfahrzeug. Diese besitzen jeweils einen Boden vorne, wie oben beschrieben, und sind dadurch leichter, was zum Beispiel hilft, Kraftstoff zu sparen.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigen:
- Fig. 1a: eine erste Ausführungsform eines Bodens vorne in einer schematischen Seitenansicht von oben,
- Fig. 1b: eine zweite Ausführungsform eines Bodens vorne in einer schematischen Seitenansicht von oben,
- Fig. 1c: eine Sitzbefestigung,
- Fig. 2: einen Boden vorne in einer schematischen Seitenansicht von unten.

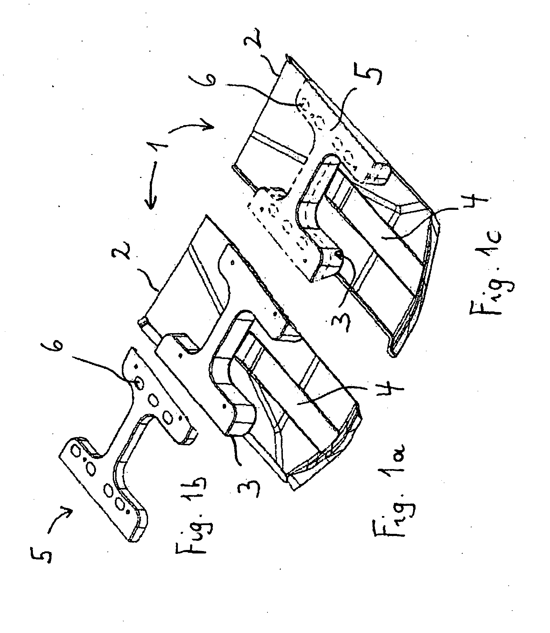

Figur 1a zeigt einen Boden vorne 1 mit einer Bodenplatte 2 aus einem im D-LFT-Verfahren hergestellten Polyamid. Die Bodenplatte 2 hat etwa einen rechteckigen Zuschnitt und besteht aus PA6.6/GF30 bei einer Materialstärke von etwa 3 mm. Formschlüssig verbunden mit der Bodenplatte 2 ist die Sitzbefestigung 3. Diese wurde in ein und demselben Arbeitsgang mit der Bodenplatte 2 hergestellt und besteht insofern ebenfalls aus PA6.6/GF30. Zur Verbesserung der Strukturstabilität für den Fall eines Seiten- oder Frontalaufpralls besitzt die Bodenplatte 2 ferner eine an ihrer Oberfläche angeordnete Metallverstärkung 4 mit einer Stärke von ca. 0,8 mm.

Figur 1b zeigt eine Metallverstärkung 5, die bei der Montage auf die Sitzbefestigung 3 aufgelegt und mit dieser formschlüssig umpresst oder nachträglich verklebt wird. Das Ergebnis der Montage zeigt Figur 1c. Durch die Metallverstärkung 5 wird das Verhalten der Bodenplatte 2 bei einem Seiten- oder Frontalaufprall verbessert.

Die Metallverstärkung 5 besitzt Befestigungselemente 6, z.B. Montagelöcher, für einen (nicht gezeigten) Kraftfahrzeugsitz. Da bei einer einteiligen Ausbildung von Bodenplatte und Sitzbefestigung die Streuungen in den Abmessungen geringer sind als bei der Herstellung einer mehrteiligen Blechkarosserie, bei der sich die Sitzbefestigungen auf verschiedenen Bauteilen befinden, wird die Montage der Kraftfahrzeugsitze erleichtert.

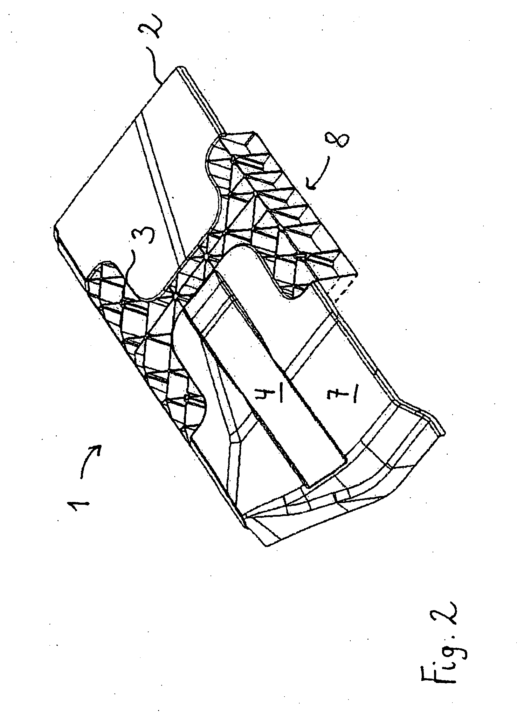

Figur 2 zeigt die Unterseite 7 eines Bodens vorne 1. In dieser Darstellung erkennt man die Wabenstruktur 8 der Sitzbefestigung 3, mit dem im Vergleich zu einer massiven Ausführung Material eingespart und sogar die Strukturstabilität für den Fall eines Frontal- oder Seitenaufpralls verbessert werden kann.

Der in den Figuren 1a-c und 2 gezeigte Boden vorne 1 ist etwa um 40 % leichter als ein entsprechender Boden vorne in Blechbauweise. Dies mindert das Gewicht des zugeordneten Unterbodens bzw. des Fahrzeugs und hilft Kraftstoff zu sparen.

Obwohl vorstehend konkrete Ausführungsformen beschrieben wurden, wird der Fachmann erkennen, dass die Beschreibung dieser Ausführungsformen nicht zum Zweck hat, die Erfindung in der angegebenen Form zu beschränken. Die Erfindung soll vielmehr alle Modifikationen, Äquivalente und Alternativen umfassen, die in den Schutzumfang der Ansprüche fallen.

### Bezugszeichenliste

- 01: Boden vorne
- 02: Bodenplatte
- 03: Sitzbefestigung
- 04: Metallverstärkung
- 05: Metallverstärkung
- 06: Sitzbefestigungselement
- 07: Unterseite
- 08: Wabenstruktur
- 09: Sitzquerträger

## Patentansprüche

1. Boden vorne (1) eines Karosserieunterbaus, mit einer Bodenplatte (2) aus Kunststoff, bei dem eine Sitzbefestigung (3) mit der Bodenplatte (2) einteilig ausgebildet und zusammen mit der Bodenplatte (2) in einem Arbeitsgang im Direkt-LFT-Verfahren hergestellt ist, wobei die Sitzbefestigung (3) eine Metallverstärkung (5) besitzt.

2. Boden vorne nach Anspruch 1, bei dem die Bodenplatte (2) eine Kunststoffmatrix mit darin eingebetteten Fasern hat.

3. Boden vorne nach einem der vorherigen Ansprüche, bei dem als Fasern Glasfasern, Kohlefasern, Aramidfasern oder Naturfasern vorgesehen sind.

4. Boden vorne nach einem der vorhergehenden Ansprüche, bei dem die Fasern eine durchschnittliche Länge zwischen 20 mm und 40 mm haben.

5. Boden vorne nach einem der vorhergehenden Ansprüche, bei dem der Faseranteil zwischen 20 Gew% und 40 Gew% beträgt.

6. Boden vorne nach einem der vorhergehenden Ansprüche, bei dem als Material Polyamid oder Polypropylen vorgesehen sind.

7. Boden vorne nach einem der vorhergehenden Ansprüche, bei der als Material PA6.6/GF30 oder PP/GF30 gewählt ist.

8. Boden vorne nach einem der vorhergehenden Ansprüche, bei dem die Bodenplatte eine Metallverstärkung (4) besitzt.

9. Boden vorne nach einem der vorhergehenden Ansprüche, bei dem die Sitzbefestigung (3) eine Wabenstruktur (8) hat.

10. Boden vorne nach einem der vorhergehenden Ansprüche, bei dem die Bodenplatte (2) auf ihrer Oberfläche angeformte Versteifungsrippen besitzt.

11. Boden vorne nach einem der vorhergehenden Ansprüche, wobei die Metallverstärkung (5) bei der Montage auf die Sitzbefestigung (3) aufgelegt und mit dieser formschlüssig umpresst oder nachträglich verklebt wird.

12. Karosserieunterbau einer Kraftfahrzeugkarosserie, Kraftfahrzeugkarosserie oder Kraftfahrzeug mit einem Boden vorne gemäß einem der vorherigen Ansprüche.

13. Verfahren zur Herstellung eines Boden vorne (1) eines Karosserieunterbaus, mit einer Bodenplatte (2) aus Kunststoff, wobei eine Sitzbefestigung (3) zusammen mit der Bodenplatte (2) in einem Arbeitsgang im Direkt-LFT-Verfahren hergestellt wird und wobei die Sitzbefestigung eine Metallverstärkung (5) besitzt.

## Claims

1. The front floor (1) of a lower part of the body, comprising a base plate (2) made of plastic in which a seat fastening (3) with the base plate (2) is arranged in an integral manner and is produced together with the base plate (2) in one work cycle directly in direct LFT process, with the seat fastening (3) having a metal reinforcement (5).

2. A front floor according to claim 1, wherein the base plate (2) comprises a plastic matrix with fibers embedded therein.

3. A front floor according to one of the preceding claims, wherein glass fibers, carbon fibers, aramid fibers or natural fibers are provided as fibers.

4. A front floor according to one of the preceding claims, wherein the fibers have an average length of between 20 mm and 40 mm.

5. A front floor according to one of the preceding claims, wherein the percentage of fibers is between 20 percent by weight and 40 percent by weight.

6. A front floor according to one of the preceding claims, wherein polyamide or polypropylene is provided as a material.

7. A front floor according to one of the preceding claims, wherein PA6.6/GF30 or PP/GF30 is chosen as the material.

8. A front floor according to one of the preceding claims, wherein the base plate has a metal reinforcement (4).

9. A front floor according to one of the preceding claims, wherein the seat fastening (3) has a honeycomb structure (8) .

10. A front floor according to one of the preceding claims, wherein the base plate (2) has stiffening ribs formed on its surface.

11. A front floor according to one of the preceding claims, wherein the metal reinforcement (5) is placed on the seat fastening (3) during mounting and is pressed around the same in an interlocking manner or is subsequently glued together.

12. A lower part of a motor vehicle body, a motor vehicle body or motor vehicle with a front floor according to one of the preceding claims.

13. A method for producing a front floor (1) of a lower part of a body, comprising a base plate (2) made of plastic, with a seat fastening (3) being produced together with the base plate (2) in one work cycle in direct LFT process and with the seat fastening comprising a metal reinforcement (5).

## Revendications

1. Plancher avant (1) d'un bas de caisse de carrosserie, avec un panneau de plancher (2) en matière plastique, dans lequel une fixation de siège (3) est formée d'un seul tenant avec le panneau de plancher (2) et fabriquée en même temps que le panneau de siège (2) dans un procédé LFT direct, la fixation de siège (3) possédant un renfort métallique (5).

2. Plancher avant selon la revendication 1, dans lequel le panneau de plancher (2) est une matrice en matière plastique dans laquelle des fibres sont incluses.

3. Plancher avant selon l'une des revendications précédentes, dans lequel les fibres prévues sont des fibres de verre, des fibres de carbone, des fibres d'aramide ou des fibres naturelles.

4. Plancher avant selon l'une des revendications précédentes, dans lequel les fibres ont une longueur moyenne comprise entre 20 mm et 40 mm.

5. Plancher avant selon l'une des revendications précédentes, dans lequel la proportion de fibres est comprise entre 20 % en poids et 40 % en poids.

6. Plancher avant selon l'une des revendications précédentes, dans lequel le matériau prévu est du polyamide ou du polypropylène.

7. Plancher avant selon l'une des revendications précédentes, dans lequel le matériau choisi est du PA6.6/GF30 ou du PP/GF30.

8. Plancher avant selon l'une des revendications précédentes, dans lequel le panneau de plancher possède un renfort métallique (4).

9. Plancher avant selon l'une des revendications précédentes, dans lequel la fixation de siège (3) a une structure en nid d'abeilles (8).

10. Plancher avant selon l'une des revendications précédentes, dans lequel le panneau de plancher (2) possède des nervures raidisseuses formées sur sa surface.

11. Plancher avant selon l'une des revendications précédentes, dans lequel le renfort métallique (5) est posé sur la fixation de siège (3) lors du montage et pressé autour d'elle en correspondance de forme ou collé par la suite.

12. Bas de caisse de carrosserie d'une carrosserie de véhicule à moteur, carrosserie de véhicule à moteur ou véhicule à moteur possédant un plancher avant selon l'une des revendications précédentes.

13. Procédé pour la fabrication d'un plancher avant (1) d'un bas de caisse de carrosserie, avec un panneau de plancher (2) en matière plastique, dans lequel une fixation de siège (3) est fabriquée en même temps que le panneau de plancher (2) en une opération selon le procédé LFT direct et dans lequel la fixation de siège possède un renfort métallique (5).
